# EUROPEAN PATENT APPLICATION

(11) **EP 4 378 672 A1**
(43) Date of publication of application: **05.06.2024**
(21) Application number: 22383165.2
(22) Date of filing: 01.12.2022
(51) Int. Cl.: B29C 70/44, C08J 5/12, C08J 11/26, B29C 65/48

(54) **METHOD OF PRODUCING A WIND TURBINE BLADE USING A HYDROLYSIS REACTION**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

It is described a method of producing a wind turbine blade or a part thereof, the method comprising:
i) providing a wind turbine blade preform that comprises a resin, in particular an epoxy amine resin, with a cleavable functional group, in particular at least one of an acetal and a ketal functional group, at the resin surface; and
ii) processing the resin surface by inducing a hydrolysis reaction with respect to the cleavable functional group. Further, a wind turbine blade and a use of a hydrolysis reaction are described.

## Description

### Field of invention

The present invention relates to a method of producing a wind turbine blade or a part thereof. Further, the present invention relates to a wind turbine blade or a part thereof that has been manufactured with the method. The present invention further relates to a specific use of a hydrolysis reaction. Therefore, the present invention relates to the field of wind turbines and their manufacture.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Wind turbines blades are generally manufactured by forming two wind turbine blade half shells and bonding them together afterwards at the bonding lines. Alternatively, two or more pieces of a blade are bonded in lengthwise direction (e.g. a split blade or modular blade). Bonding of wind turbine blade half shells and/or pieces may require certain conditions and use of bonding paste. The bonding paste needs to be mixed, dispensed, and cured at the main blade manufacturing molds (when the blades are manufactured by providing a resin in a mold). The bonding process may be hereby seen as the bottleneck of wind turbine blade production, since the application of bonding paste (or other adhesive) can significantly increase the blade production cycle time, the cost, and the factory footprint of molds and equipment, while output may be decreased.

Conventionally, due to application constraints, (thixotropic) epoxy bonding pastes are applied that are highly viscous in nature, which, apart from requiring special machinery for mixing and metering, can create difficulties in the application process. For example, the lack of flow of such a material generates voids in the bond lines between the wind turbine blade pieces. Further, excess material can generate exothermic peaks during curing that damages both, the base laminates and the adhesive itself. Both factors can induce premature failures of the blade in operation, which are (especially the thermal damage) hard to detect. Therefore, the (nondestructive) inspection time (i.e. by ultrasound scan or other means) for the voids of each blade may require hours.

In the light of the nature of common bonding pastes (usually glass-filled epoxy resins or others), the cured products are commonly fragile, and with increasing wind turbine blade length, undergo a higher running load, which makes them prone to cracking. A growth of the cracks may lead to separation of adhering parts which initiates failure modes with the potential of severe damage. The cracks may even ultimately render the blade unusable and cause catastrophic failures of the wind turbine generators in service.

Conventionally, to reduce these drawbacks, additional reinforcement laminates are sued over the bond lines. Nevertheless, in this manner the wind turbine blade weight is increased, which leads to a further increase in costs and efforts.

After spending additional costs and efforts for the production, there will be further costs and efforts for discarding the wind turbine blades to come, since the standard bonding paste materials are generally non-recyclable.

### Summary of the Invention

There may be a need to manufacture a wind turbine blade (or a part thereof) in an efficient, robust, and environmentally friendly manner.

This need may be met by the subject matter according to the independent claims. Advantageous embodiments of the present invention are described by the dependent claims.

According to an aspect of the invention, there is provided a method of producing a wind turbine blade or a part thereof, the method comprising:
i) providing a wind turbine blade preform (i.e. a semifinished product, in other words a wind turbine blade under production) that comprises a resin (in particular an epoxy amine resin) with a cleavable functional group (in particular at least one of an acetal and a ketal functional group) at the resin surface (in particular, the wind turbine blade preform may further comprise a reinforcement material and/or a core material); and
ii) processing the resin surface by inducing a hydrolysis reaction (for example using an acidic liquid) with respect to the cleavable functional group (for example by inducing a hydrolysis reaction of the acetal/ketal functional group to yield a hydroxyl functional group).

According to a further aspect of the invention, there is described a (recyclable, in particular substantially completely recyclable) wind turbine blade or a part thereof obtainable by a method described above. Such a wind turbine blade may comprise a bonding line that reflects the hydrolysis reaction step, e.g. the presence of hydroxyl functional groups, in particular at an epoxy-amine resin surface that generally comprises only acetal/ketal functional groups.

According to a further aspect of the invention, there is described a use (method of using) of a hydrolysis reaction to prepare (process) a resin surface of a wind turbine blade preform (bonding line) for attaching a further wind turbine blade preform.

In the context of the present document, the term "resin" may in particular denote any synthetic substance that is suitable for producing a wind turbine blade. In particular, the resin may by a polymeric substance that can be present in a first state and in a second state, wherein the viscosity of the second state is larger than of the first state. In an example, the resin is provided in the first state in a mold (infusion resin) to from the wind turbine blade preform. During a curing (hardening) process, the resin of the first state may be converted to a rigid substance in the second state. Preferably, the resin is in the first state during manufacture of the wind turbine blade (preform) and in the second state afterwards (e.g. when mounted at the wind turbine). An industrially important resin in the field of wind turbine blade manufacturing may be epoxy amine resin. The term "resin surface" may in particular refer to an outermost (exposed) layer of the resin. At least a part of such a resin surface may be used as a bonding line to attach a further wind turbine blade preform.

In the context of the present document, the term "cleavable functional group" may in particular denote a functional group having a covalent bond that may be cleaved under certain conditions (e.g. temperature, pH value, reagent). For instance, the cleavable functional group may in particular be an acid-cleavable functional group, i.e. a functional group having a covalent bond that may be cleaved by an acid or under acidic conditions (e.g. pH of less than 7).

In the context of the present document, the term "hydrolysis" may in particular denote a chemical reaction in which a molecule of water breaks one or more chemical bonds. The term "hydrolysis" may be applied for different reactions such as substitution, elimination, and solvation reactions in which water is the nucleophile. In an example, a hydrolysis reaction comprises the reaction of an acetal/ketal functional group to a hydroxyl functional group. Another example may comprise the reaction of the hydroxyl functional group to a ketone functional group. A further example may comprise the hydrolysis of an ester bond to a hydroxyl functional group. In a further example, a disulfide bond is hydrolyzed to a hydroxyl functional group.

In an exemplary embodiment, the resin surface comprises ketal functional groups (see below, left side), for example since it consists of epoxy-amine resin. Below on the right side, there is shown a general definition of an acetal and a ketal functional group, where R1, R2, R3, R4 represent identical or different organic fragments (e.g. at least one carbon atom with other atoms attached thereto). Hereby, the acetal comprises a hydrogen atom, while the ketal comprises a further carbon atom at this position.

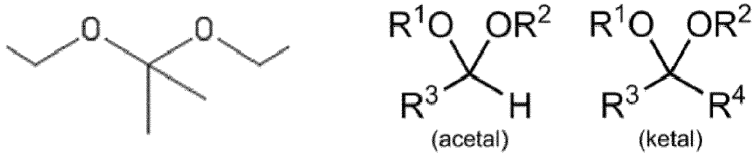

In an exemplary example, the acetal or ketal moiety can be cleaved by a hydrolysis reaction, in particular catalyzed under acidic conditions. An example of this reaction is provided below: under acidic conditions (H₃O⁺), one of two acetal moieties reacts to a hydroxyl functional group (OH), while the other acetal moiety does not react. Accordingly, a hemiacetal with a hydroxyl functional group is obtained. In a further reaction, the hemiacetal can react under acidic conditions to an aldehyde or ketone functional group.

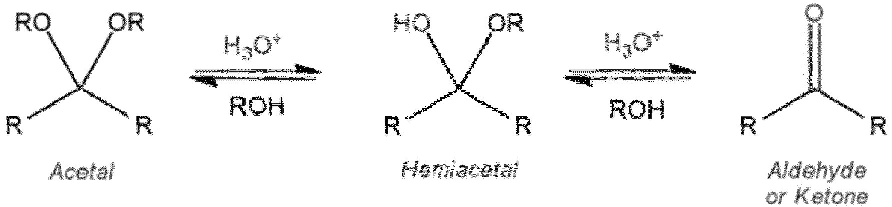

An example of the cleavage of an acetal bond in an epoxy amine resin (thermoset network) is schematically shown in the following reaction formula:

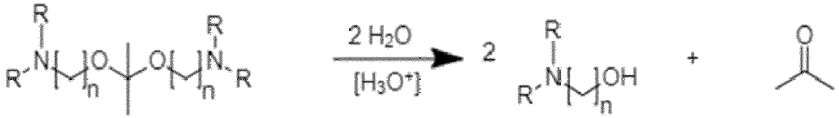

Under acidic conditions (e.g. by providing an acidic liquid), the acetal moieties react to hydroxyl functional groups. Further, a compound with an aldehyde/ketone functional group can be produced (and may evaporate afterwards). The hydroxyl functional group, however, may be used to establish a robust bond with a further wind turbine blade preform resin surface, in particular comprising further hydroxyl functional groups.

According to an exemplary embodiment, the invention may be based on the idea that a wind turbine blade (or a part thereof) can be manufactured in an efficient, robust, and environmentally friendly manner, when the resin surface of a wind turbine blade preform (to be connected to a further wind turbine blade preform) is processed by a hydrolysis reaction (before the attachment). Specifically, the resin surface may comprise acetal/ketal moieties which react by the hydrolysis to hydroxyl functional groups. These may be connected in an efficient and robust manner (in particular using welding and/or an additional intermediate layer) to a further resin surface of the further wind turbine blade preform to obtain the wind turbine blade (or a part thereof).

Without additional effort, the cleavable functional moieties already present in the resin surface may be exploited to be prepared (in the sense of adhesive) for establishing the connection to the further wind turbine blade preform. In this manner, costs and efforts can be significantly reduced, while at the same time a homogenous (material) and therefore recyclable wind turbine blade is obtained.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a method of producing may be combined with any other exemplary embodiment of a method of producing and with any exemplary embodiment of a wind turbine blade and with any exemplary embodiment of a use and with any exemplary embodiment of a method of recycling and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

According to an embodiment, inducing the hydrolysis reaction comprises applying an acidic (aqueous) liquid to the resin surface. In particular, the acidic liquid comprises an organic acid or a carboxylic acid (e.g. at least one of the group which consists of acetic acid, lactic acid, citric acid, oxalic acid, tartaric acid). This may provide the advantage that the hydrolysis reaction can be induced in an efficient and selective manner.

In an embodiment, the acidic liquid has a pH value of less than 7, in particular of less than 6, in particular of less than 5, in particular of less than 4. Moreover, the acidic liquid may have a pH value of more than 0, in particular of more than 1.

In an embodiment, the acid is preferably an organic acid or a carboxylic acid, rather than a mineral acid. An organic acid or a carboxylic acid may not only be particularly suitable for adjusting an appropriate pH, but may additionally also act as a solvent for the recyclate. The acidic liquid may be a (pure) acid, a diluted acid (e.g. with water), and/or an acid/solvent mixture.

In an embodiment, the acid comprises a monocarboxylic acid, a dicarboxylic acid, a tricarboxylic acid and/or a polycarboxylic acid, in particular selected from the group consisting of acetic acid, lactic acid, citric acid, oxalic acid and tartaric acid. Combinations of two or more of these acids are suitable as well.

In an exemplary embodiment, the resin surface is contacted with the acidic liquid (e.g. 20-30% acetic acid) at a temperature in a range of from 70°C to 100°C, such as from 80°C to 90°C, and/or for a period of 1 hour or less.

According to an exemplary example, the resin surface (at the bonding line) is wetted with an aqueous acid, e.g., 30 % acetic acid, which can act as both, solvent and acid. Other acids can be e.g. lactic acid, citric acid, oxalic, tartaric acid, which can be used with or without an
additional solvent (e.g. a polar solvent like ethanol, butanol or DMSO). The acidic liquid may have suitable solubility/miscibility in water or water/solvent mix and may be configured to act as a solvent as well. In an example, the acid is configured to interact with and dissolve also nonpolar substances.

According to a further embodiment, the acidic liquid is mixed with a solvent to form an acidic solvent. In particular, the solvent is a polar solvent (e.g. at least one solvent of the group, which consists of water and an organic solvent (e.g. ethanol, butanol, DMSO).

The acidic liquid may comprise the additional solvent (e.g. a polar solvent like ethanol, butanol or DMSO), then termed an in this context an acidic solvent. The acidic liquid may have suitable solubility/miscibility in water or a water/solvent mix and may be configured to act as a solvent as well. The solvent may be configured to migrate into the thermoset structure(s) and swell it, in particular combined with the ability to form strong hydrogen bonds (polar protic solvents) .

According to a further embodiment, the acidic liquid or the acidic solvent is provided by a porous carrier, in particular one of a fleece, a sponge, a foam, a mesh, a fabric, a felt, and/or a hydrogel. In this manner, efficient and selective provision of the acidic liquid may be enabled.

In an example, the acidic liquid is soaked in a carrier and/or immobilized in form of a hydrogel (e.g. chitosan-based) to avoid the acidic solution to run off from the application area. The carrier or gel containing the acidic liquid may be adjusted to the size of the resin surface (bonding line).

The term "porous", as used herein, may in particular mean that the material concerned exhibits a plurality of voids or pores within its structure or texture, typically substantially uniformly distributed within its structure or texture. Typically, a porous material may be characterized by a relatively high specific surface area (large ratio of surface area to mass) .

In an embodiment, the porous material has a porosity of from 50 to 90 %, in particular from 60 to 85 %, in particular from 70 to 80 %. In the context of the present specification, the term "porosity" may in particular denote the ratio of the volume of voids to the total volume. The porosity can be determined by conventional porosimetric methods known to a person skilled in the art, for instance by water saturation method or mercury intrusion porosimetry method.

According to a further embodiment, inducing the hydrolysis reaction further comprises: providing heat to the resin surface, in particular in the range 70 to 100°C, more in particular 80 to 90°C. These conditions may catalyze the hydrolysis reaction in an efficient manner.

In an example, the bonding line is heated to 80 to 90°C to activate the resin surface by cleavage of acetal (ketal groups in the resin network. The heating time (e.g. one hour or less) is chosen to cleave the acetal/ketal bonds (only) in the outermost layer of the wind turbine blade preform (thermoset structure (resin surface) is converted into a thermoplastic material (processed resin surface)). Nevertheless, the heating time may be chosen so that cleavage within the bulk material (below the outermost layer) is avoided.

The term "thermoplastic", as used herein, denotes that the material becomes pliable or moldable at a certain elevated temperature and solidifies upon cooling, in contrast to a thermosetting material.

In an example, providing the heat comprises covering the resin surface with a heating device, in particular a heating blanket (to advance the process).

According to a further embodiment, the hydrolysis reaction is only applied to the resin surface, i.e. the outermost layer of the resin material.

According to a further embodiment, the method further comprises neutralizing the processed resin surface after inducing the hydrolysis reaction, in particular using a basic (alkaline) solution, more in particular a hydroxy- or carbonate-based solution.

After heating, the acidic liquid/solution can be neutralized. In case a carrier or immobilized acid is used, the material can be removed and the surface is treated with a slightly basic solution, e.g. a hydroxy- or carbonate based alkaline solution, for example NaHCO₃. If needed, additional similar material may be applied, and afterwards the processed resin surface is completely dried. Alternatively, further thermoplastic material can be added as a foil or sheet to the bond line.

According to a further embodiment, the method further comprises adding a reactive compound, in particular an isocyanate-based compound, to the processed resin surface. The reactive compound may be provided as (part of) a hot adhesive melt. In an example, the isocyanate-based compound may react with the (processed) resin surface to form polyurethan (PU).

In an example, one or more layers of a reactive hot melt (in particular including the isocyanate-based compound) can be added (e.g. as a solid adhesive (in sheet or powder form)). Preferably, the reactive adhesive has a comparable (or similar) melting point
as the thermoplastic (processed resin surface).

In an exemplary example, the reactive (hot melt) adhesive comprises an isocyanate or blocked isocyanate functional group can react with the free alcohol (hydroxyl) groups of the cleaved resin surface (formed by the hydrolysis reaction) to form polyurethane.

In this manner, a strong covalent bond between adhesive and the newly formed reactive groups can be established. For example, the thermoplastic (processed resin surface) can be re-crosslinked to enhance the already robust mechanical properties of the processed resin surface further.

According to a further embodiment, the method further comprises attaching a further wind turbine blade preform (in particular a further processed resin surface (further bond line)) to the processed resin surface. This may provide the advantage that a robust attachment between wind turbine blade preforms (e.g. half-shells or pieces) is enabled.

According to a further embodiment, the further wind turbine preform comprises a further processed resin surface,
the processed resin surface and the further processed resin surface are chemically comparable, in particular similar. For example, both resin surfaces may comprise hydroxyl functional groups.

According to a further embodiment, the processed resin surface and the further processed resin surface are chemically different. For example, the further resin surface may comprise polyurethane.

According to a further embodiment, the method further comprises welding the processed resin surface and the further resin surface together. Welding is an established industry procedure that may be applied in a surprisingly efficient manner to attach the wind turbine blade preform and the further wind turbine blade preform. In an example, each surface comprises hydroxyl functional groups that may be forced into robust hydrogen bonds during the welding.

According to a further embodiment, the method further comprises adding an intermediate layer structure to the processed resin surface before providing the further resin surface (in other words providing the intermediate layer in between the resin surface and the further resin surface). According to a further embodiment, the intermediate layer is chemically comparable (in particular similar) or different with respect to the processed resin surface.

In an example, if joining a further wind turbine blade preform (in this context this may also be a wind turbine blade add-on) to the processed resin surface, the further wind turbine blade preform may also be prepared with the above mentioned resin chemistry (in particular hydroxyl functional groups), so that the two pieces can be joined accordingly.

In a further example, when the further wind turbine blade preform material is different, the further wind turbine blade preform may be adhered at first to an intermediate layer comprised of a comparable resin chemistry as the processed resin surface, e.g. as a patches at contact areas, so that the further wind turbine blade preform can be attached to the processed resin surface in a robust manner.

In a specific example, the intermediate layer is included in the molding process. For example, the intermediate layer is placed on the (first state, uncured) resin material (in the mold). In this specific example, the intermediate layer may be seen as the (further) resin surface.

According to a further embodiment, the method further comprises:
i) providing a mold;
ii) applying the resin material (in a first state that is less viscous than a second, cured state) into the mold (in particular, reinforcement(s) and/or core materials may be placed in the mold before providing the resin); and
iii) curing the resin material (in particular subsequently or prior to the processing of the resin surface).

The mold typically forms a cavity and may therefore also be designated as mold cavity. The mold may be adapted to an outline of the wind turbine blade or the part thereof to be produced. For instance, the mold may be designed as a blade half shell or a part thereof.

In an embodiment, the step of applying a resin into the mold comprises a step of injecting an infusion resin into the mold, for instance by means of a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

In an embodiment, the (infusion) resin comprises an epoxy amine (infusion) resin (epoxy-amine-based resin or epoxy-based resin). An epoxy amine resin may for instance comprise an epoxy component and an amine component.

In an embodiment, the curing (or hardening) of the infusion resin is not particularly limited and, depending on the type of infusion resin, may take place at room temperature or at elevated temperatures (i.e. may involve heating).

In an embodiment, the method further comprises, after curing the infusion resin, removing the mold to thereby obtain the produced wind turbine blade or the part thereof.

According to a further embodiment, the processed resin surface and/or the further processed resin surface comprises a hydroxyl functional group. Said functional group may be a result of the hydrolysis reaction and may enable a robust attachment of a further (processed) resin surface). In particular, strong hydrogen bonds may be established between the hydroxyl functional groups. In an example, there can also be amine groups from an epoxy-amine reaction. Said amine groups may further contribute to H-bonding.

In an embodiment, the (infusion) resin comprises an epoxy amine (infusion) resin containing a cleavable functional group, in particular at least one of an acetal and a ketal functional group. Commercially available examples thereof are based on Recyclamine^{®} (from Aditya Birla Chemicals) or Cleavamine^{®} (from Adesso Advanced Materials) technology for instance. In another example, the resin material comprises polyurethane.

In a further aspect, a method of recycling a wind turbine blade or a part thereof, in particular a wind turbine blade or a part thereof as described herein, comprises contacting the wind turbine blade or the part thereof with an acidic (aqueous) liquid comprising an acid at a temperature in a range of from 70°C to 100°C and/or for a period of from 1 h to 10 h (such that the wind turbine blade or the part thereof is (substantially completely) degraded and the dissolvable parts thereof (substantially completely) dissolved).

In an embodiment, the step of contacting the wind turbine blade or the part thereof with an acidic aqueous liquid comprising an acid comprises a placing the wind turbine blade or the part thereof in a bath of an acidic aqueous liquid. Alternatively, the wind turbine blade or the part thereof to be recycled may also be sprayed or contacted in another way with an acidic aqueous liquid comprising an acid.

According to a further embodiment, blade add-ons (e.g. blade surface mounted - and usually noise reducing and/or aerodynamic performance enhancing add-ons) can be joined to a wind turbine blade surface and such add-ons, but not limited to, may include vortex generators (VG's), spoilers, slats, and/or flaps. Such wind turbine blade add-ons may be seen in this context as further wind turbine blade preforms and may be attached to the processed resin surface as described above for wind turbine blade preforms such as half-shells or other pieces.

According to an exemplary embodiment, the bonding process (using resins containing acetal or ketal moieties) can be performed as follows:
i) in case of add-on structures of different chemistry than resin surface: add resin containing acetal or ketal moiety to said add-on structure;
ii) wet the bond line on each part/section with 30% acidic solution (in a carrier);
iii) heat the bond lines to approximately 80°C;
iv) remove the carrier (or immobilized acid) and apply a basic solution (e.g. NaHCO₃); and
v) if needed, add one or more layers of polyurethane hotmelt or activated resin (containing acetal or ketal moieties);
vi) assemble the two or more pieces with activated material at the bond lines;
vi) in the case of isocyanate: a strong covalent bond between adhesive and the newly formed reactive groups can be established.

The invention or the embodiments of the invention described in this document can be descriptively summarized as follows: The presented invention describes a bonding process with reduced material required and which ensure homogeneity and re-cyclability of the materials applied. The process uses the properties of the (epoxy) resin already in the blade and its possibilities to create covalent bonds (when another reactive material is present) in the thermoplastic material that becomes available, when activating with an acid or acid mixture.

While the present invention has been described in detail by way of specific embodiments and examples, it should be appreciated the invention is not limited thereto and various alterations and modifications are possible, without departing from the scope of the invention.

## Claims

1. A method of producing a wind turbine blade or a part thereof, the method comprising:
providing a wind turbine blade preform that comprises a resin, in particular an epoxy amine resin, with a cleavable functional group, in particular at least one of an acetal and a ketal functional group, at the resin surface; and
processing the resin surface by inducing a hydrolysis reaction with respect to the cleavable functional group.

2. The method as set forth in claim 1,
wherein inducing the hydrolysis reaction further comprises applying an acidic liquid to the resin surface,
in particular wherein the acidic liquid comprises an organic acid or a carboxylic acid.

3. The method as set forth in claim 2,
wherein the acidic liquid is mixed with a solvent to form an acidic solvent,
in particular wherein the solvent is a polar solvent, more in particular water or an organic solvent.

4. The method as set forth in claim 2 or 3,
wherein the acidic liquid or the acidic solvent is provided by a porous carrier, in particular one of a fleece, a sponge, a foam, a mesh, a fabric, a felt, or a hydrogel.

5. The method as set forth in any one of the preceding claims,
wherein inducing the hydrolysis reaction further comprises:
providing heat to the resin surface,
in particular in the range 70 to 100°C, more in particular 80 to 90°C,
more in particular wherein providing the heat comprises covering the resin surface with a heating device, in particular a heating blanket.

6. The method as set forth in any one of the preceding claims, further comprises:
neutralizing the processed resin surface after inducing the hydrolysis reaction,
in particular using an alkaline solution.

7. The method as set forth in any one of the preceding claims, further comprising:
adding a reactive compound, in particular an isocyanate-based component, to the processed resin surface.

8. The method as set forth in any one of the preceding claims, further comprising:
attaching a further wind turbine blade preform, in particular a further processed resin surface, to the processed resin surface.

9. The method as set forth in claim 8,
wherein the further wind turbine preform comprises a further processed resin surface, and
wherein the processed resin surface and the further processed resin surface are chemically comparable or chemically different.

10. The method as set forth in claim 8 or 9, further comprising:
welding the processed resin surface and the further resin surface together.

11. The method as set forth in any one of the preceding claims, further comprising:
adding an intermediate layer structure between the processed resin surface and the further resin surface,
in particular wherein the intermediate layer is chemically comparable or chemically different with respect to the processed resin surface.

12. The method as set forth in any one of the preceding claims, further comprising:
providing a mold;
applying the resin material into the mold;
curing the resin material,
in particular subsequently or prior to the processing of the resin surface.

13. The method as set forth in any one of the preceding claims,
wherein the processed resin surface and/or the further processed resin surface comprises a hydroxyl functional group.

14. A wind turbine blade or a part thereof obtainable by a method according to any one of claims 1 to 13.

15. Using a hydrolysis reaction to prepare a resin surface of a wind turbine blade preform for attaching a further wind turbine blade preform.
